# EUROPÄISCHE PATENTSCHRIFT

(11) **EP 4 079 985 B1**
(45) Veröffentlichungstag und Bekanntmachung des Hinweises auf die Patenterteilung: **22.10.2025**
(21) Anmeldenummer: 22169672.7
(22) Anmeldetag: 25.04.2022
(51) Int. Cl.: E04C 2/20, E04C 2/288, E04C 2/26

(54) **BAUPLATTE UND VERFAHREN ZU DEREN HERSTELLUNG SOWIE DEREN VERWENDUNG**
CONSTRUCTION PANEL AND METHOD FOR THEIR PREPARATION AND THEIR USE
PLAQUE DE CONSTRUCTION ET SON PROCÉDÉ DE FABRICATION, AINSI QUE SON UTILISATION

(30) Priorität: 23.04.2021 DE 202021102201 U
(43) Veröffentlichungstag der Anmeldung: 26.10.2022
(73) Patentinhaber: Dauksch, Enrico, 01558 Großenhain (DE)
(72) Erfinder: Dauksch, Enrico, 01558 Großenhain (DE)
(74) Vertreter: Lippert Stachow Patentanwälte Rechtsanwälte Partnerschaft mbB

(56) Entgegenhaltungen:
- EP-A1- 2 562 324
- EP-A2- 0 100 231
- GB-A- 1 215 137
- KR-B1- 101 205 913
- US-A- 4 462 194

## Beschreibung

Die Erfindung betrifft allgemein eine dreidimensionale Bauplatte zur Errichtung einer Wand oder zur Oberflächenverkleidung einer vorhandenen Wand oder Decke oder dem Aufbau von Fußboden auf einer vorhandenen Bodenplatte oder Geschossdecke in Gebäuden und ein Verfahren zu deren Herstellung sowie deren Verwendung. Sie betrifft insbesondere Bauplatten, die eine Dämmplatte aufweisen und für solche Bauteile in einem Gebäude eingesetzt werden, welche einer erhöhten Feuchtigkeitsbelastung ausgesetzt sind, wie beispielsweise Bäder, Saunaräume, unbeheizte oder wenig beheizte Räume in einem sonst beheizten Gebäude und ähnliche.

Derartige mittels Bauplatten errichtete oder verkleidete Wände, Böden und Decken dienen verschiedenen Verwendungszwecken, wie beispielsweise Trennwänden, Unterteilungen eines Raumes, Verkofferungen von Einbauten, innenseitige Dachverkleidung und ähnlichem. Die benannten Gebäudeteile sollen oft bestimmten Anforderungen hinsichtlich Wärme- und/oder Schallisolierung entsprechen, so dass die Bauplatten entsprechende isolierende Eigenschaften aufweisen sollen. Zu diesem Zweck weisen derartige Bauplatten häufig eine Dämmplatte auf, die aus einem Hartschaum besteht.

Die derzeit verwendeten Bauplatten sind oft als Verbundplatten ausgebildet und weisen einen Kern meist aus einem extrudierten Polystyrol auf, welcher beidseitig von einer versteifenden, den Schaumstoff vor Beschädigungen schützenden und als Haftuntergrund für die Deckschicht des Bauteils dienenden Oberflächenschicht bedeckt ist. Extrudiertes Polystyrol weist eine hohe Dichte und Druckfestigkeit auf und hat eine homogene Struktur.

Hartschaum aus expandiertem Polystyrol ist demgegenüber durch seine grobkörnige Struktur charakterisiert. Expaniertes Polystyrol wird aufgrund seiner sehr geringen Wärmeleitfähigkeit als einlagige Platte zur Wärme- und Trittschalldämmung verwendet. Als Verbundplatte ist es mitunter als einseitige Lage an steifen Platten, wie beispielsweise Gipskarton, angebracht.

Beide genannten Hartschaummaterialien weisen eine geringe Dichte und eine geschlossenzellige Struktur auf. Sie sind beständig gegenüber Einwirkungen von Wasser und Feuchtigkeit. Letzteres trifft aufgrund der gleichmäßigen Struktur insbesondere auf extrudiertes Polystyrol zu.

Aus der GB 1 215 137 A ist ein in wärmeisolierendes Material bekannt, das eine einzelne Schicht aus elastischem, geschäumtem thermoplastischem Material umfasst, welche zwischen einer flexiblen Schicht aus Aluminium oder aus einer Aluminiumlegierung oder einer aluminisierten Folie und einer flexiblen, nicht metallischen, wasserundurchlässigen Schicht angeordnet ist. Die geschäumte Schicht kann geschlossenzelliges Polyethylen oder Polystyrol sein. Die wasserundurchlässige Schicht kann ein gewebter oder nicht gewebter Stoff, Filz auf Seidenbasis oder Sisalfaser oder Kraftpapier sein, die alle mit Bitumen imprägniert sind, oder kann eine Polyvinylchloridfolie sein. Spezifizierte Mittel zum Verbinden der Schichten sind: (i) durch Klebstoff, (ii) Heißverkleben einer bituminierten Schicht mit der Schaumschicht, anschließendes Verkleben der Metallschicht oder metallisierten Folie und der Schaumschicht, und (iii) Aufschäumen der Kunststoffschicht zwischen den Deckschichten.

KR 101 205 913 B1 offenbart eine Wärmeisolationsplatte zur Gebäudeverkleidung. Die Wärmeisolationsplatte umfasst eine geschäumte Polyethylenplatte, die auf einer Seite eine Textilschicht und auf der anderen Seite eine Aluminiumschicht aufweist. Auf der Aluminiumschicht ist eine wasserundurchlässige Schicht aus synthetischem Butylkautschuk aufgebracht, die der zu verkleidenden Betonwand zugewandt ist.US 4 462 194 A beschreibt ebenfalls eine Wärmeisolationsplatte zur Gebäudeverkleidung. Die Platte umfasst eine geschäumte Kunststoffplatte, z. B. aus Polystyrol, Polyethylen, glasfaservestärktem Isocyanuratschaum u. a. Die geschäumte Kunststoffplatte wird auf der einen Seite durch eine Kunstharzplatte und auf der anderen Seite durch eine wasserundurchlässige Aluminiumschicht bedeckt.

EP 0 100 231 A2 betrifft eine Bauplatte zur Dachverkleidung oder Verkleidung von Wänden unterhalt des Erdniveaus. Die Bauplatte weist eine poröse Platte aus Kunststoff auf. Auf der einen Seite der porösen Kunststoffplatte kann eine Textilschicht aufgebracht sein. Auf der anderen Seite ist eine wasserundurchlässige Barriereschicht aufgebracht, z. B. aus Bitumen.

Der Nachteil der bekannten Bauplatten besteht in deren ungünstiger energetischer Bilanz hinsichtlich der energieintensiven Herstellung, des nur bedingt möglichen Recyclings und der aufwendigen Entsorgung bzw. Verwertung.

Zudem ist aus der EP 2 562 324 A1 eine Verbundplatte zur Herstellung von Rahmenverlängerungen von Fenstern und Türen mit einem Kern aus einer geschlossenzelligen Polyethylenterephthalat-Schaumplatte, mindestens einer ersten Deckschicht auf einer ersten Seite und einer zweiten Deckschicht auf einer zweiten Seite bekannt.

Es besteht daher ein Bedarf an einer energieeffizienten Bauplatte, deren bauphysikalische Eigenschaften dem des extrudierten Polystyrol vergleichbar sind, insbesondere hinsichtlich der Verwendung in Feuchträumen, in denen zum Schutz des Bauwerks besondere Anforderungen an die Abdichtung von Einbauten bestehen.

Zur Lösung der Aufgabenstellung werden Bauplatte gemäß Anspruch 1 und 3, Verfahren zum Herstellen einer Bodenplatte gemäß Anspruch 11 und 12 sowie die Verwendung einer Bauplatte gemäß Anspruch 17 angegeben. Auf die unabhängigen Ansprüche rückbezogene Ansprüche stellen vorteilhafte Ausgestaltungen dar.

Erfindungsgemäß wird als Kern der Verbundbauplatte eine Hartschaumplatte aus Polyethylenterephthalat verwendet. Dies bedeutet, dass die Hartschaumplatte im Wesentlichen aus Polyethylenterephthalat besteht, d. h. neben Polyethylenterephthalat können nicht mechanisch wirkende Zusatzstoffe wie z. B. Farbpigmente, Brandschutzmittel, pilzhemmende Mittel etc. enthalten sein. Unter Hartschaum wird ein geschäumtes Material bzw. Schaumstoff verstanden, das bzw. der einer Verformung unter Druckbelastung einen derart hohen Widerstand entgegensetzt, dass es bzw. er als Konstruktionsmaterial genutzt werden kann.

Die Hauptvorteile von Verbundbauplatten mit einem Hartschaumkern aus Polyethylenterephthalat sind hervorragende mechanische Eigenschaften bei geringem Gewicht. Eine typische Sandwichstruktur aus einem solchen Kernschaum weist auf zumindest einer Seite, optional auf den beiden gegenüberliegenden Oberflächen der Hartschaumplatte oder auf allen Seiten des Schaums eine stabilisierende starre Schutzschicht auf. Als Schutzschichten können beispielsweise Kunststoffschichten verwendet werden, die optional Verstärkungsfasern aufweisen können. Zum Beispiel können duroplastische Harze verwendet werden, die auf Polyester, Epoxy oder Polyurethan in Verbindung mit verschiedenen Härtern basieren. Letztere unterstützen die Vernetzung der Harze während der Herstellung der Verbundstruktur. Auch andere Schutzschichten sind verwendbar, wie nachfolgend dargelegt wird.

Für Verbundplatten mit Polyethylenterephthalat als Hartschaumkern konnte in Langzeitermüdungsprüfungen eine strukturelle und dimensionale Langzeitstabilität nachgewiesen werden, die insbesondere für Bauprodukte wünschenswert ist. Die langfristige Stabilität der Dämmeigenschaften und damit verbunden der sicheren Dämmleistung und ebenso die feuchtigkeitsabweisende geschlossenzellige und homogene Struktur sind Eigenschaften, welche in Räumen wünschenswert sind, in welchen eine mäßige bis hohe Feuchtebelastung zu erwarten ist. Hinzu kommt die Beständigkeit gegenüber Lösungsmitteln, Säuren, Salzen und anderen Stoffen. Die homogene Oberfläche gestattet zudem eine glatte und auch glänzende Beschichtung, die auch als fertige Oberfläche nutzbar und leicht zu reinigen ist.

Es besteht zudem eine Kompatibilität mit zahlreichen verschiedenen Produktionsmethoden und Beschichtungssystemen für die Hartschaumplatte, so dass individuelle Materialkombinationen möglich sind. Diese Eigenschaft unterstützt vorteilhaft die Kombination der Verbundplatte mit der in Feuchträumen erforderlichen fachgerechten Abdichtung. Die Oberflächengüte und die weitreichende Materialkompatibilität gestatten die Verbindung der Verbundplatte, insbesondere einer beidseitig mit einer Schutzschicht versehenen Verbundplatte, mit einem Dichtelement zur Herstellung einer wasserdichten Schicht, z. B. für die Verwendung in Feuchträumen. Optional kann ein Dichtelement gleichzeitig als Schutzschicht fungieren.

Die Verwendung von Polyethylenterephthalat ist hinsichtlich der Energiebilanz und ebenso hinsichtlich der Nachhaltigkeit des Erzeugnisses von Vorteil, wenn die Hartschaumplatte entsprechend einer Ausgestaltung der Erfindung aus recyceltem Polyethylenterephthalat besteht. Polyethylenterephthalat wird insbesondere zur Herstellung von Trinkflaschen und verschiedensten Lebensmittelfolien verwendet, die nach Gebrauch entsorgt und zunehmend der Wiederaufbereitung zugeführt werden. Somit steht ein Rohstoff mit guter Energiebilanz zur Verfügung, der mit geeigneten produktionsbegleitenden Maßnahmen eine klimaneutrale Produktion des Polyethylenterephthalats gestattet und der selbst wieder recycelbar ist.

Zur Verbesserung der Energiebilanz der Bauplatte gestattet das erfindungsgemäß verwendete Material der Hartschaumplatte auch den Einsatz eines CO₂-reduzierten Mörtels, z. B., Earth Friendly Mortar, oder Betons zur Herstellung der Bauplatte.

Entsprechend weiterer Ausgestaltungen der Erfindung kann das Dichtelement, welches der Herstellung einer wasserdichten Schicht für die Bauplatte dient, auf verschiedene Weise ausgebildet sein. Beispielsweise kann es folienartig oder vliesartig ausgebildet sein.

Als Folie werden regelmäßig homogene Flächengebilde angesehen, welche aus einem dünnen, den betreffenden Anforderungen, hier der dauerhaften und gegebenenfalls rissüberbrückenden Wasserdichtheit, entsprechendem Material bestehen.

Vliesartige Dichtelemente sind Flächengebilde, welche aus Natur- oder Chemiefasern bestehen, welche ausgerichtet oder ungeordnet aufeinanderliegend angeordnet sind. Die Spinnfasern oder Filamente sind miteinander verklebt, verschweißt, vernäht oder vernadelt. Sie weisen im Vergleich zu folienartigen Dichtelementen eine höhere Dehnbarkeit und ebenso eine Wasserdichtheit auf.

Beide Varianten können beispielsweise in Abhängigkeit von der Größe der Bauplatte durch aneinandergereihte und miteinander wasserdicht verbundene Dichtbahnen ausgeführt sein. Alternativ kann ein folienartiges oder ein vliesartiges Dichtelement ganzflächig ausgeführt sein. Auch eine Kombination mit einer Beschichtung, beispielsweise mittels einer aushärtenden Dichtmasse, ist möglich.

Das Dichtelement kann alternativ oder in Kombination miteinander auf zumindest einer Oberfläche der Hartschaumplatte, auf einer Oberfläche der Verbundplatte, als eine Schicht innerhalb der Hartschaumplatte und/oder als eine Schicht innerhalb der Verbundplatte ausgebildet sein. Eine Dichtebene innerhalb der Verbundplatte stellt eine weitere Schicht im Verbund dar und kann ebenfalls wie zuvor beschrieben ausgebildet und ausgeführt sein. Alternativ ist auch in einer solchen Ausführungsform eine Beschichtung möglich.

Die hohe Materialverträglichkeit gestattet es auch, dass das Dichtelement sowohl auf der Oberfläche einer der Schutzschichten der Verbundplatte angeordnet, beispielsweise verklebt ist, als auch anstelle einer Schutzschicht auf den Hartschaumkern einseitig aufgebracht ist. Bei ausreichender Versteifung durch die Dichtelemente können diese optional auch beidseitig des Hartschaumkerns als Schutzschicht fungieren.

Der fachmännische Einbau von Dichtelementen erfordert üblicherweise einen wasserdichten Anschluss an die angrenzenden Bauteile. Entsprechend einer weiteren Ausgestaltung der Bauplatte kann das Dichtelement zumindest abschnittsweise seitlich über die Verbundplatte, also in Verlängerung der Plattenebene der Verbundplatte, hinausragen, d. h. die Bauplatte kann ein über den Rand der Verbundplatte überstehendes Dichtelement aufweisen. Eine solche Bauplatte ist geeignet, mit den angrenzenden Bauteilen derart verbunden zu werden, dass der wasserdichte Anschluss einfach, reproduzierbar und zuverlässig sowie ohne zusätzliche Dichtbänder hergestellt werden kann. Der überstehende Rand und das Dichtelements können integral oder mehrteilig ausgebildet sein. Bei einer mehrteiligen Ausführung ist die Verbindung zwischen dem Dichtelement auf der Verbundplatte und dem überstehenden Rand augenscheinlich wasserdicht ausgebildet.

Der Hartschaumkern aus Polyethylenterephthalat ist eine thermoformbare flexible Platte, so dass vor der Ausbildung der aussteifenden Schutzschichten eine Formgebung der Platte möglich ist. Mit der Formgebung kann der Hartschaumkern beispielsweise an bauliche Gegebenheiten angepasst werden. Auch Verformungen innerhalb einer Oberfläche sind möglich. Beispielsweise kann die Hartschaumplatte zumindest abschnittsweise uneben und/oder zumindest einseitig uneben sein, d. h. die Punkte einer Oberfläche der Hartschaumplatte liegen nicht in einer Ebene. Optional kann die Bauplatte Rück- oder Vorsprünge oder abgeschrägte Bereiche aufweisen.

Struktur- und Isolierschäume aus Polyethylenterephthalat weisen niedrige Dichten im Bereich von 30 bis ca. 300 kg/m³, bevorzugt von 60 bis ca. 300 kg/m³ auf, wodurch sich verschiedene Verwendungen und Gestaltungen ergeben, die zudem mit der gewünschten Stabilität und Dämmung erzielt werden können. Die hohe Stabilität wird unter anderem durch eine Druckfestigkeit des Polyethylenterephthalats erreicht, die im Bereich von 100 bis 2.000 kPa, beispielsweise im Bereich von 200 bis 2.000 kPa, liegen kann. Die geringe Dichte bei hoher Stabilität in Verbindung mit der Vielgestaltigkeit der Oberfläche gestattet auch die Vorfertigung von fertigen Raumkomponenten, wie Duschzellen oder ganze Badzellen unter Verwendung der beschriebenen Bauplatte.

Aufgrund der zuvor beschriebenen Eigenschaften der erfindungsgemäßen Bauplatte, insbesondere der wasserdichten, langzeitstabilen und dimensionsstabilen Struktur sowie deren Ausbildung mit einem Dichtelement ist die Bauplatte besonders zur Ausbildung eines Duschbodenelements geeignet.

Gemäß weiteren Ausführungsvarianten können das Dichtelement und die Verbundplatte oder die Hartschaumplatte vollflächig miteinander verklebt sein.

Dadurch kann die Stabilität erhöht werden. Außerdem kann eine möglichst gleichmäßige mechanische Verbindung zwischen der Verbundplatte bzw. der Hartschaumplatte und dem Dichtelement gewährleistet werden, so dass z. B. Spannungsbeanspruchungen nicht zu einer Rissbildung führen und eine hohe Langzeitstabilität erreicht werden kann.

Das Dichtelement und die Verbundplatte bzw. Hartschaumplatte können bevorzugt mit einem Polymerklebstoff auf Silanbasis miteinander verklebt sein. Ein solcher Klebstoff kann z. B. silanmodifizierte Polymere auf Polyetherbasis enthalten, die mit Luftfeuchtigkeit oder durch Zusatzstoffe vernetzen und dadurch eine starke Klebeverbindung ausbilden.

Die Vorteile solcher, auch als MS-Klebstoff bezeichneten, Klebstoff sind die Ausbildung dauerhaft elastischer Klebeverbindungen, die beispielsweise häufig wiederholten Bewegungen standhalten, ohne dass die Klebeverbindung durch Sprünge, Risse und/oder Ablösungen beeinträchtigt wird. Zudem sind diese Klebstoffe im Wesentlichen schadstofffrei, d. h. sie enthalten beispielsweise keine Lösungsmittel oder Isocyanate, und lassen sich daher einfach und sicher verarbeiten.

Ein weiterer Aspekt betrifft ein Verfahren zur Herstellung einer dreidimensionalen Bauplatte. Das Verfahren weist auf: Bereitstellen einer aus Polyethylenterephthalat gefertigten Hartschaumplatte, Anordnen einer Schutzschicht auf zumindest einer Oberfläche der Hartschaumplatte zur Ausbildung einer Verbundplatte und Herstellen einer wasserdichten Schicht mittels Anordnen eines Dichtelements auf einer Oberfläche der Hartschaumplatte, auf einer Oberfläche der Verbundplatte, als eine Schicht innerhalb der Verbundplatte und/oder als eine Schicht innerhalb der Hartschaumplatte.

Mittels des vorgeschlagenen Verfahrens kann eine der vorstehend beschriebenen Bauplatten hergestellt werden. Die Erläuterungen zu dieser Bauplatte sind entsprechend auf deren Herstellungsverfahren übertragbar. Mit dem Herstellungsverfahren sind die Vorteile der Bauplatte entsprechend verbunden.

Gemäß verschiedenen Ausführungsvarianten können das Dichtelement und entweder die Verbundplatte oder die Hartschaumplatte miteinander verklebt, optional vollflächig miteinander verklebt, werden.

Zum Verkleben des Dichtelements mit der Verbundplatte oder der Hartschaumplatte kann ein Klebstoff auf eine Oberfläche des Dichtelements und/oder eine Oberfläche der Verbundplatte bzw. der Hartschaumplatte aufgesprüht werden.

Das Aufsprühen des Klebstoffs stellt eine einfache Applikationsmöglichkeit für den Klebstoff dar, mit der ein sehr gleichmäßiger Auftrag des Klebstoffs erreicht werden kann. Dadurch kann eine Klebeverbindung mit homogenen Eigenschaften erzielt werden, was sich positiv auf die mechanischen Eigenschaften der Klebeverbindung und die Langzeitstabilität der Bauplatte auswirkt.

Optional kann der Klebstoff vor dem Aufsprühen erwärmt werden, z. B. auf eine Temperatur im Bereich zwischen 20 °C und 40 °C, beispielsweise 30 °C. Das Aufsprühen kann beispielsweise bei einer Temperatur im Bereich zwischen 15 °C und 35 °C, beispielsweise bei 20 °C, erfolgen. Hierfür können beispielsweise Bauteile der Sprühvorrichtung, wie z. B. Schläuche, Düsen etc., auf eine Temperatur im genannten Bereich erwärmt werden.

Das Erwärmen des Klebstoffs kann die Verringerung der Viskosität des Klebstoffs und dadurch die Verwendung von Klebstoffen, die bei Umgebungstemperatur zu fest für die Verwendung in einem Sprühverfahren wären, ermöglichen. Zudem kann der Auftrag des Klebstoffs gleichmäßiger erfolgen. Dadurch können die mechanischen Eigenschaften der Klebeverbindung weiter verbessert werden.

Bevorzugt können das Dichtelement und die Verbundplatte oder die Hartschaumplatte mittels eines Polymerklebstoffs auf Silanbasis miteinander verklebt werden.

Das Verkleben des Dichtelements mit der Verbundplatte oder der Hartschaumplatte kann mittels eines Stempels oder einer Membran erfolgen. Dabei werden die zu verklebenden Flächen der Verbundplatte bzw. der Hartschaumplatte und des Dichtelements einander mit einem Abstand gegenüberliegend oder übereinanderliegend angeordnet. Nachfolgend wird das Dichtelement mittels des Stempels oder mittels der Membran vollflächig auf die Verbundplatte oder die Hartschaumplatte gepresst bis eine Klebeverbindung hergestellt ist. Optional kann die Membran mittels eines Luftkissens auf die Verbundplatte oder die Hartschaumplatte gepresst werden. Weiter kann die Membran optional Bestandteil des Luftkissens sein.

Die Anwendung eines Stempels oder einer Membran zur Herstellung der Klebeverbindung gestattet einen gleichmäßigen und vollflächigen Kontakt zwischen beiden miteinander zu verklebenden Flächen und damit eine zuverlässige Verklebung sowie die Ausbildung einer homogenen Dichtfläche. Zudem lässt sich mittels des beschriebenen Klebeverfahrens eine Klebeverbindung besonders schnell ausbilden.

Ein weiterer Aspekt der Erfindung betrifft die Verwendung einer Bauplatte gemäß vorstehender Beschreibung zur Errichtung einer Wand oder zur Oberflächenverkleidung einer vorhandenen Wand oder Decke oder einem Aufbau von Fußboden auf einer vorhandenen Bodenplatte oder Geschossdecke in Gebäuden.

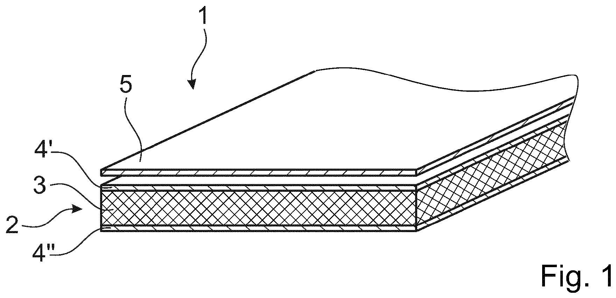

Die Erläuterungen zu dieser Bauplatte sind entsprechend auf deren Verwendung übertragbar. Mit der Verwendung sind die Vorteile der Bauplatte entsprechend verbunden. Die Erfindung soll nachfolgend anhand eines Ausführungsbeispiels näher erläutert werden. Der Fachmann würde die zuvor sowie die nachfolgend beschriebenen Merkmale in weiteren Ausführungsbeispielen miteinander kombinieren, soweit ihm das sinnvoll erscheint. Die zugehörige Zeichnung zeigt in
- Fig. 1: eine erfindungsgemäße Bauplatte in Explosionsdarstellung.

Die Figur dient lediglich der Erläuterung der Erfindung. Sie zeigt nur die dafür notwendigen Details. Sie erhebt keinen Anspruch auf Vollständigkeit oder Maßstäblichkeit.

Fig. 1 zeigt eine erfindungsgemäße Bauplatte 1 in einer schematischen Darstellung. Diese umfasst eine Verbundplatte 2 mit dem oberseitig darauf angeordneten Dichtelement 5. Die Verbundplatte 2 umfasst einen Hartschaumkern 3, welcher aus Polyethylenterephthalat besteht und beidseitig jeweils mit einer aussteifenden und den Hartschaumkern schützenden Schutzschicht 4', 4" bedeckt ist. Die Schutzschichten 4', 4" bestehen beide beispielhaft, jedoch nicht beschränkend aus einem duroplastischen und Verstärkungsfasern aufweisenden Harz.

Das Dichtelement 5 ist mittels eines geeigneten Klebstoffs (nicht dargestellt) auf die Verbundplatte 2 ganzflächig bzw. vollflächig geklebt. Das Dichtelement 5 hat beispielhaft, jedoch nicht beschränkend die Größe der Verbundplatte 2.

### Bezugszeichenliste

- 1: Bauplatte
- 2: Verbundplatte
- 3: Hartschaumplatte
- 4', 4": Schutzschichten
- 5: Dichtelement

## Patentansprüche

1. Dreidimensionale Bauplatte (1) zur Errichtung einer Wand oder zur Oberflächenverkleidung einer vorhandenen Wand oder Decke oder einem Aufbau von Fußboden auf einer vorhandenen Bodenplatte oder Geschossdecke in Gebäuden, wobei die Bauplatte (1) eine Verbundplatte (2) mit einer Hartschaumplatte (3) als Kern und zumindest einer auf einer Oberfläche der Hartschaumplatte (3) aufgebrachten Schutzschicht (4', 4") aufweist, wobei die Hartschaumplatte (3) aus Polyethylenterephthalat gefertigt ist und die Bauplatte (1) ein Dichtelement (5) zur Herstellung einer wasserdichten Schicht aufweist, **dadurch gekennzeichnet, dass** das Dichtelement (5) auf einer Oberfläche der Hartschaumplatte (3), auf einer Oberfläche der Verbundplatte (2), als eine Schicht innerhalb der Verbundplatte (2) und/oder als eine Schicht innerhalb der Hartschaumplatte (3) ausgebildet ist und dass das Dichtelement (5) und die Verbundplatte (2) oder die Hartschaumplatte (3) mit einem Polymerklebstoff auf Silanbasis miteinander verklebt sind.

2. Dreidimensionale Bauplatte (1) nach Anspruch 1, **dadurch gekennzeichnet, dass** das Dichtelement (5) folienartig oder vliesartig ausgebildet ist und/oder als Dichtbahn oder als Beschichtung ausgeführt ist.

3. Dreidimensionale Bauplatte (1) zur Errichtung einer Wand oder zur Oberflächenverkleidung einer vorhandenen Wand oder Decke oder einem Aufbau von Fußboden auf einer vorhandenen Bodenplatte oder Geschossdecke in Gebäuden, wobei die Bauplatte (1) eine Verbundplatte (2) mit einer Hartschaumplatte (3) als Kern und zumindest einer auf einer Oberfläche der Hartschaumplatte (3) aufgebrachten Schutzschicht (4', 4") aufweist, wobei die Hartschaumplatte (3) aus Polyethylenterephthalat gefertigt ist und die Bauplatte (1) ein Dichtelement (5) zur Herstellung einer wasserdichten Schicht aufweist, **dadurch gekennzeichnet, dass** das Dichtelement (5) vliesartig ausgebildet ist.

4. Dreidimensionale Bauplatte (1) nach Anspruch 3, **dadurch gekennzeichnet, dass** das Dichtelement (5) als Dichtbahn oder als Beschichtung ausgeführt ist.

5. Dreidimensionale Bauplatte (1) nach einem der vorstehenden Ansprüche, **dadurch gekennzeichnet, dass** die Hartschaumplatte (3) aus einem recycelten Polyethylenterephthalat besteht.

6. Dreidimensionale Bauplatte (1) nach einem der Ansprüche 3 bis 5, **dadurch gekennzeichnet, dass** das Dichtelement (5) auf einer Oberfläche der Hartschaumplatte (3), auf einer Oberfläche der Verbundplatte (2), als eine Schicht innerhalb der Verbundplatte (2) und/oder als eine Schicht innerhalb der Hartschaumplatte (3) ausgebildet ist.

7. Dreidimensionaler Bauplatte (1) nach einem der vorstehenden Ansprüche, **dadurch gekennzeichnet, dass** das Dichtelement (5) zumindest abschnittsweise seitlich über die Verbundplatte (2) hinausragt.

8. Dreidimensionale Bauplatte (1) nach einem der vorstehenden Ansprüche, **dadurch gekennzeichnet, dass** die Hartschaumplatte (3) zumindest abschnittsweise uneben und/oder zumindest einseitig uneben ist.

9. Dreidimensionale Bauplatte (1) nach einem der vorstehenden Ansprüche, **dadurch gekennzeichnet, dass** die Hartschaumplatte (3) eine Dichte im Bereich zwischen 30 bis 300 kg/m³ und/oder eine Druckfestigkeit im Bereich von 100 kPa bis 2.000 kPa aufweist.

10. Dreidimensionale Bauplatte (1) nach einem der Ansprüche 1, 2 oder 6 bis 9, **dadurch gekennzeichnet, dass** das Dichtelement (5) und die Verbundplatte (2) oder die Hartschaumplatte (3) vollflächig miteinander verklebt sind.

11. Verfahren zur Herstellung einer dreidimensionalen Bauplatte (1), das Verfahren aufweisend:
- Bereitstellen einer aus Polyethylenterephthalat gefertigten Hartschaumplatte (3),
- Anordnen einer Schutzschicht (4', 4") auf zumindest einer Oberfläche der Hartschaumplatte (3) zur Ausbildung einer Verbundplatte (2) und
- Herstellen einer wasserdichten Schicht mittels Anordnen eines Dichtelements (5) auf einer Oberfläche der Hartschaumplatte (3), auf einer Oberfläche der Verbundplatte (2), als eine Schicht innerhalb der Verbundplatte (2) und/oder als eine Schicht innerhalb der Hartschaumplatte (3),
wobei das Dichtelement (5) und die Verbundplatte (2) oder die Hartschaumplatte (3) mit einem Polymerklebstoff auf Silanbasis miteinander verklebt werden.

12. Verfahren zur Herstellung einer dreidimensionalen Bauplatte (1), das Verfahren aufweisend:
- Bereitstellen einer aus Polyethylenterephthalat gefertigten Hartschaumplatte (3),
- Anordnen einer Schutzschicht (4', 4") auf zumindest einer Oberfläche der Hartschaumplatte (3) zur Ausbildung einer Verbundplatte (2) und
- Herstellen einer wasserdichten Schicht mittels Anordnen eines Dichtelements (5) auf einer Oberfläche der Hartschaumplatte (3), auf einer Oberfläche der Verbundplatte (2), als eine Schicht innerhalb der Verbundplatte (2) und/oder als eine Schicht innerhalb der Hartschaumplatte (3),
wobei das Dichtelement (5) vliesartig ausgebildet ist.

13. Verfahren nach Anspruch 12, wobei das Dichtelement (5) und die Verbundplatte (2) oder die Hartschaumplatte (3) miteinander verklebt werden.

14. Verfahren nach Anspruch 11 oder 13, wobei das Dichtelement (5) und die Verbundplatte (2) oder die Hartschaumplatte (3) vollflächig miteinander verklebt werden.

15. Verfahren nach Anspruch 11, 13 oder 14, wobei zum Verkleben des Dichtelements (5) mit der Verbundplatte (2) oder die Hartschaumplatte (3) ein Klebstoff auf eine Oberfläche des Dichtelements (5) und/oder eine Oberfläche der Verbundplatte (2) bzw. der Hartschaumplatte (3) aufgesprüht wird.

16. Verfahren nach einem der Ansprüche 11 oder 13 bis 15, wobei der Klebstoff vor dem Aufsprühen erwärmt wird.

17. Verwendung einer Bauplatte (1) nach einem der Ansprüche 1 bis 10 zur Errichtung einer Wand oder zur Oberflächenverkleidung einer vorhandenen Wand oder Decke oder einem Aufbau von Fußboden auf einer vorhandenen Bodenplatte oder Geschossdecke in Gebäuden.

## Claims

1. Three-dimensional building panel (1) for erecting a wall or for surface cladding of an existing wall or ceiling or for constructing a floor on an existing floor slab or floor ceiling in buildings, wherein the building panel (1) comprises a composite panel (2) with a rigid foam panel (3) as a core and at least one protective layer (4', 4") applied to one surface of the rigid foam panel (3), wherein the rigid foam panel (3) is made of polyethylene terephthalate and the building panel (1) has a sealing element (5) for producing a watertight layer **characterized in that** the sealing element (5) is formed on one surface of the rigid foam panel (3), on one surface of the composite panel (2), as a layer within the composite panel (2) and/or as a layer within the rigid foam panel (3), and that the sealing element (5) and the composite panel (2) or the rigid foam panel (3) are bonded to each other with a silane-based polymer adhesive.

2. Three-dimensional building panel (1) according to claim 1, **characterized in that** the sealing element (5) is formed as a film or fleece and/or is designed as a sealing membrane or coating.

3. Three-dimensional building panel (1) for erecting a wall or for surface cladding of an existing wall or ceiling or for constructing a floor on an existing floor slab or floor ceiling in buildings, wherein the building panel (1) has a composite panel (2) with a rigid foam panel (3) as a core and at least one protective layer (4', 4') applied to one surface of the rigid foam panel (3), wherein the rigid foam panel (3) is made of polyethylene terephthalate and the building panel (1) has a sealing element (5) for producing a watertight layer, **characterized in that** the sealing element (5) is designed to be fleece-like.

4. Three-dimensional building panel (1) according to claim 3, **characterized in that** the sealing element (5) is designed as a sealing membrane or as a coating.

5. Three-dimensional building panel (1) according to one of the preceding claims, **characterized in that** the rigid foam panel (3) consists of recycled polyethylene terephthalate.

6. Three-dimensional building panel (1) according to one of claims 3 to 5, **characterized in that** the sealing element (5) is formed on a surface of the rigid foam panel (3), on a surface of the composite panel (2), as a layer within the composite panel (2) and/or as a layer within the rigid foam panel (3).

7. Three-dimensional building panel (1) according to one of the preceding claims, **characterized in that** the sealing element (5) protrudes laterally beyond the composite panel (2) at least in sections.

8. Three-dimensional building panel (1) according to one of the preceding claims, **characterized in that** the rigid foam panel (3) is uneven at least in sections and/or uneven on at least one side.

9. Three-dimensional building panel (1) according to one of the preceding claims, **characterized in that** the rigid 1foam panel (3) has a density in the range between 30 and 300 kg/m³ and/or a compressive strength in the range from 100 kPa to 2,000 kPa.

10. Three-dimensional building panel (1) according to one of claims 1, 2 or 6 to 9, **characterised in that** the sealing element (5) and the composite panel (2) or the rigid foam panel (3) are bonded to each other over their entire surface.

11. Method for manufacturing a three-dimensional building panel (1), the method comprising:
- providing a rigid foam panel (3) made of polyethylene terephthalate,
- arranging a protective layer (4', 4") on at least one surface of the rigid foam panel (3) to form a composite panel (2), and
- producing a waterproof layer by placing a sealing element (5) on one surface of the rigid foam panel (3), on one surface of the composite panel (2), as a layer within the composite panel (2) and/or as a layer within the rigid foam panel (3),
wherein the sealing element (5) and the composite panel (2) or the rigid foam panel (3) are bonded to each other with a silane-based polymer adhesive.

12. A method for manufacturing a three-dimensional building panel (1), the method comprising:
- providing a rigid foam panel (3) made of polyethylene terephthalate,
- arranging a protective layer (4', 4") on at least one surface of the rigid foam panel (3) to form a composite panel (2), and
- producing a waterproof layer by placing a sealing element (5) on one surface of the rigid foam panel (3), on one surface of the composite panel (2), as a layer within the composite panel (2) and/or as a layer within the rigid foam panel (3),
wherein the sealing element (5) is formed in a nonwoven type.

13. Method according to claim 12, wherein the sealing element (5) and the composite panel (2) or the rigid foam panel (3) are bonded together.

14. Method according to claim 11 or 13, wherein the sealing element (5) and the composite panel (2) or the rigid foam panel (3) are bonded to each other over the entire surface.

15. Method according to claim 11, 13, or 14, wherein an adhesive is sprayed onto a surface of the sealing element (5) and/or a surface of the composite panel (2) or the rigid foam panel (3) in order to bond the sealing element (5) to the composite panel (2) or the rigid foam panel (3).

16. Method according to one of claims 11 or 13 to 15, wherein the adhesive is heated before spraying.

17. Use of a building panel (1) according to any of claims 1 to 10 for erecting a wall or for surface cladding of an existing wall or ceiling or for constructing a floor on an existing floor slab or floor ceiling in buildings.

## Revendications

1. Panneau de construction tridimensionnel (1) pour l'érection d'un mur ou pour le revêtement de surface d'un mur ou d'un plafond existant ou d'une structure de plancher sur un panneau de sol ou un plafond d'étage existant dans des bâtiments, le panneau de construction (1) présentant un panneau composite (2) avec un panneau en mousse dure (3) en tant que noyau et au moins une couche de protection (4', 4'' appliquée sur une surface du panneau en mousse dure (3), le panneau en mousse dure (3) étant fabriqué en polyéthylène téréphtalate et le panneau de construction (1) présentant un élément d'étanchéité (5) pour la production d'une couche étanche à l'eau, **caractérisé en ce que** l'élément d'étanchéité (5) est réalisé sur une surface du panneau en mousse dure (3), sur une surface du panneau composite (2), sous la forme d'une couche à l'intérieur du panneau composite (2) et/ou sous la forme d'une couche à l'intérieur du panneau en mousse dure (3), et **en ce que** l'élément d'étanchéité (5) et le panneau composite (2) ou le panneau en mousse dure (3) sont collés ensemble avec un adhésif polymère à base de silane.

2. Panneau de construction tridimensionnel (1) selon la revendication 1, **caractérisé en ce que** l'élément d'étanchéité (5) est réalisé à la manière d'une feuille ou à la manière d'un non-tissé et/ou est conçu sous forme de bande d'étanchéité ou sous forme de revêtement.

3. Panneau de construction tridimensionnel (1) pour l'érection d'un mur ou pour le revêtement de surface d'un mur ou d'un plafond existant ou d'une structure de plancher sur un panneau de sol ou un plafond d'étage existant dans des bâtiments, le panneau de construction (1) présentant un panneau composite (2) avec un panneau en mousse dure (3) en tant que noyau et au moins une couche de protection (4', 4") appliquée sur une surface du panneau en mousse dure (3), le panneau en mousse dure (3) étant fabriqué en polyéthylène téréphtalate et le panneau de construction (1) présentant un élément d'étanchéité (5) pour la production d'une couche étanche à l'eau, **caractérisé en ce que** l'élément d'étanchéité (5) est réalisé à la manière d'un non-tissé.

4. Panneau de construction tridimensionnel (1) selon la revendication 3, **caractérisé en ce que** l'élément d'étanchéité (5) est conçu sous forme de bande d'étanchéité ou sous forme de revêtement.

5. Panneau de construction tridimensionnel (1) selon l'une quelconque des revendications précédentes, **caractérisé en ce que** le panneau en mousse dure (3) est constitué d'un polyéthylène téréphtalate recyclé.

6. Panneau de construction tridimensionnel (1) selon l'une quelconque des revendications 3 à 5, **caractérisé en ce que** l'élément d'étanchéité (5) est réalisé sur une surface du panneau en mousse dure (3), sur une surface du panneau composite (2), sous la forme d'une couche à l'intérieur du panneau composite (2) et/ou sous la forme d'une couche à l'intérieur du panneau en mousse dure (3).

7. Panneau de construction tridimensionnel (1) selon l'une quelconque des revendications précédentes, **caractérisé en ce que** l'élément d'étanchéité (5) dépasse latéralement au moins par sections du panneau composite (2).

8. Panneau de construction tridimensionnel (1) selon l'une quelconque des revendications précédentes, **caractérisé en ce que** le panneau en mousse dure (3) est irrégulier au moins par sections et/ou irrégulier au moins sur un côté.

9. Panneau de construction tridimensionnel (1) selon l'une quelconque des revendications précédentes, **caractérisé en ce que** le panneau en mousse dure (3) présente une densité dans la plage comprise entre 30 et 300 kg/m³ et/ou une résistance à la compression dans la plage comprise entre 100 kPa et 2 000 kPa.

10. Panneau de construction tridimensionnel (1) selon l'une quelconque des revendications 1, 2 ou 6 à 9, **caractérisé en ce que** l'élément d'étanchéité (5) et le panneau composite (2) ou le panneau en mousse dure (3) sont collés ensemble sur toute la surface.

11. Procédé de fabrication d'un panneau de construction tridimensionnel (1), le procédé présentant :
- la fourniture d'un panneau en mousse dure (3) fabriqué en polyéthylène téréphtalate,
- l'agencement d'une couche de protection (4', 4") sur au moins une surface du panneau en mousse dure (3) pour réaliser un panneau composite (2), et
- la production d'une couche étanche à l'eau au moyen d'un agencement d'un élément d'étanchéité (5) sur une surface du panneau en mousse dure (3), sur une surface du panneau composite (2), sous la forme d'une couche à l'intérieur du panneau composite (2) et/ou sous la forme d'une couche à l'intérieur du panneau en mousse dure (3), l'élément d'étanchéité (5) et le panneau composite (2) ou le panneau en mousse dure (3) étant collés ensemble avec un adhésif polymère à base de silane.

12. Procédé de fabrication d'un panneau de construction tridimensionnel (1), le procédé présentant :
- la fourniture d'un panneau en mousse dure (3) fabriqué en polyéthylène téréphtalate,
- l'agencement d'une couche de protection (4', 4") sur au moins une surface du panneau en mousse dure (3) pour réaliser un panneau composite (2), et
- la production d'une couche étanche à l'eau au moyen d'un agencement d'un élément d'étanchéité (5) sur une surface du panneau en mousse dure (3), sur une surface du panneau composite (2), sous la forme d'une couche à l'intérieur du panneau composite (2) et/ou sous la forme d'une couche à l'intérieur du panneau en mousse dure (3), l'élément d'étanchéité (5) étant réalisé à la manière d'un non-tissé.

13. Procédé selon la revendication 12, **caractérisé en ce que** l'élément d'étanchéité (5) et le panneau composite (2) ou le panneau en mousse dure (3) sont collés ensemble.

14. Procédé selon la revendication 11 ou 13, **caractérisé en ce que** l'élément d'étanchéité (5) et le panneau composite (2) ou le panneau en mousse dure (3) sont collés ensemble sur toute la surface.

15. Procédé selon la revendication 11, 13 ou 14, **caractérisé en ce que**, pour coller l'élément d'étanchéité (5) au panneau composite (2) ou au panneau en mousse dure (3), un adhésif est pulvérisé sur une surface de l'élément d'étanchéité (5) et/ou sur une surface du panneau composite (2) ou du panneau en mousse dure (3).

16. Procédé selon l'une quelconque des revendications 11 ou 13 à 15, dans lequel l'adhésif est chauffé avant la pulvérisation.

17. Utilisation d'un panneau de construction (1) selon l'une quelconque des revendications 1 à 10 pour l'érection d'un mur ou pour le revêtement de surface d'un mur ou plafond existant ou d'une structure de plancher sur un panneau de plancher ou plafond d'étage existant dans des bâtiments.
